Europäisches Patentamt

European Patent Office

Office européen des brevets

(19)

(11) EP 0 897 125 A2

(12) **EUROPEAN PATENT APPLICATION**

(43) Date of publication:
17.02.1999 Bulletin 1999/07

(51) Int Cl.$^6$: **G02B 26/10**

(21) Application number: 98306371.0

(22) Date of filing: 10.08.1998

(84) Designated Contracting States:
**AT BE CH CY DE DK ES FI FR GB GR IE IT LI LU MC NL PT SE**
Designated Extension States:
**AL LT LV MK RO SI**

(30) Priority: **12.08.1997 GB 9717175**

(71) Applicant: **BARR & STROUD LIMITED Glasgow G51 4BZ, Scotland (GB)**

(72) Inventor: **Runciman, Herbert Morrison Glasgow, G12 9QZ, Scotland (GB)**

(74) Representative:
**MacDougall, Donald Carmichael et al Cruikshank & Fairweather 19 Royal Exchange Square Glasgow G1 3AE, Scotland (GB)**

(54) **Optical beam deflector**

(57) An optical beam scanner or deflector (10) produces a rectilinear unidirectional substantially constant rate scan utilising prism elements (18) mounted on rotatable wheel(s) (12, 14). The prism elements (18) form sectors of the wheels (12, 14) and have equal vertex angles. The arrangement is such that the beam (34) is twice refracted to achieve the scan. This can be either once through two prism elements or twice through one prism element.

FIG.2

EP 0 897 125 A2

**Description**

The present invention relates to optical beam deflection. In particular, but not exclusively, the invention relates to apparatus for deflecting a collimated optical beam in a repetitive manner, to produce a rectilinear, unidirectional, substantially constant rate scan.

It is a common requirement, in applications such as infra-red imaging, to be able to sweep an optical beam over an area to produce a scan. It is important to be able to deflect the optical beam repetitively to produce consistent scans; that is, with little variation between scans. It is also important to deflect the beam at a constant rate to provide uniformity within each scan.

There are a number of techniques which are conventionally used to provide repetitive deflection of an optical beam. One known technique is to use a pair of refractive wedges which counter rotate about an axis passing through a mid portion of each wedge. This technique however, has three main disadvantages. Firstly, the sweep rate varies sinusoidally so the sweep is not performed at a constant rate. Secondly, the sweep is bidirectional (the sweep changes direction during each scan) rather than unidirectional. Thirdly, a single sweep cycle corresponds to 360° rotation of the prisms, so a high sweep rate implies a high rotation rate.

It is an object of one embodiment of the present invention to provide a deflector which obviates or mitigates at least one of the above disadvantages.

According to a first aspect of the present invention there is provided apparatus for deflecting a collimated optical beam in a unidirectional manner, said apparatus comprising a rotating assembly of refractive prism elements in the form of sectors uniformly disposed around one or more wheels, the prism elements being of equal vertex angles and the arrangement of the prism elements being such that on each wheel all prism elements have each vertex adjacent the axis of rotation or on each wheel all prism elements have each vertex adjacent the wheel rim, and means for directing a collimated light beam through the assembly so as to be twice refracted by said prism elements.

Preferably the prism elements are mounted on two contra-rotating wheels with the vertex angles of the prism elements on one wheel adjacent the wheel periphery and the vertex angles of the prism elements on the other wheel adjacent the wheel axis, in which case the directing means may for example take the form of lenses or mirrors with the beam being refracted once by each prism element.

Alternatively the prism elements are all mounted on a single wheel with the vertex angle of the prism elements all adjacent the wheel periphery or all adjacent the wheel axis, in which case the directing means comprises a roof prism to direct the beam through a double refracting pass of the same prism element.

In the case where there are two wheels they may rotate about a common axis or they may rotate about parallel offset axes.

Each prism element may be an achromatic prism pair. Alternatively, each prism element may have an achromatising structure on one surface.

Embodiments of the present invention will now be described with reference to the accompanying drawings in which:

Figure 1 shows a perspective view of one embodiment of the present invention;
Figure 2 is a side view of the embodiment of Figure 1 illustrating the optical deflecting action;
Figure 3 shows an alternative embodiment of the present invention;
Figure 4 shows a side view of Figure 3;
Figure 5 shows a side view of another embodiment of the present invention; and
Figure 6 shows a front view of the embodiment of Figure 5.

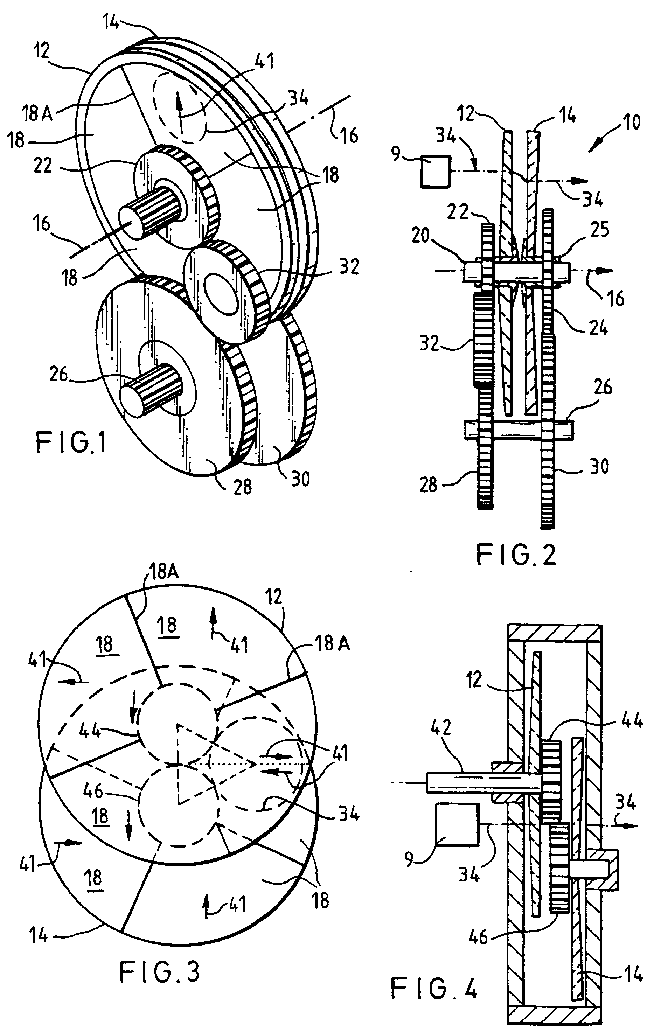

Figures 1 and 2 show an optical beam deflector 10 which comprises a rotating assembly of refractive prism elements 18 mounted on two wheels 12, 14 which have a common axis 16 but are slightly axially spaced apart. There are four prism elements 18 on the first wheel 12 each forming a 90° sector of the wheel and oriented so that the vertex angles are towards the perimeter of the wheel 12; whereas, there are four prism elements 18 on the second wheel 14 each forming a 90° sector of the wheel but oriented so that the vertex angles are towards the centre of the wheel 14. All of the prism elements 18 have identical vertex angles and are so arranged with respect to the rotation axis 16 and the location of the collimated optical beam 34 which is to be deflected that when the wheels 12, 14 contra-rotate the two prism elements 18 through which the optical beam 34 passes freely have their vertex pointing directions 41 oppositely aligned (as will be explained in greater detail) at the centre of the scan of the optical beam 34, and the adjacent faces of the prism elements 18 on the two wheels 12, 14 are parallel. The centre of the scan in that position at which the beam 34 is not deflected.

The beam 34 is delivered to the assembly at a fixed position by an optical delivery device 9 which may be in the form of one or more lenses, or mirrors and the output beam from the assembly is scanned in the direction which is either into or out of the plane of the paper in Figure 2 and essentially linearly not arcuately and also unidirectionally not bidirectionally.

The vertex pointing direction 41 lies along the line of greatest slope of each prism element 18 and in the Figure 1 embodiment because the two wheels have a common rotational axis 16 it follows that the pointing direction 41 for each prism element 18 at the centre of the scan is unique and is orthogonal to the axis 16 and each sector shaped prism element is symmetrical about that pointing direction. The profile of adjacent prism elements on the same wheel and extending along the radial boundary of the elements (e.g. 18A) is therefore identical and there is no step at boundary 18A from one element 18 to the adjacent element 18 but the boundary 18A is defined by the intersection of two mutually-inclined planes. In this embodiment therefore the four elements 18 on wheel 12 could be manufactured as a single quasi annular wedge having four planes with its circular vertex at the wheel rim and its circular base adjacent the axis 16. Wheel 14 could be manufactured in complementary fashion with circular vertex adjacent the axis 16 and circular base at the wheel rim.

In order to provide contra-rotation of the two wheels 12, 14 wheel 12 is mounted on a spindle 20 co-axial with axis 16 and is secured to a first cog 22 which meshes with intermediate cog 32 to drive cog 28 secured to a lay shaft 26. A second cog 30 secured to lay shaft 26 meshes with cog 24 secured to a sleeve 25 which is connected to wheel 14. The sleeve 25 is free to rotate with respect to and is carried by the spindle 20. The cogs are dimensioned so that the wheels 12, 14 rotate at equal speeds.

The number of pairs of prism elements round the rim of the wheels determines the angle through which the wheels must rotate between successive sweeps. The sweep rate varies sinusoidally, and because the complete sinusoidal waveform would correspond to a rotation angle of 360°, we have

$$V(\theta) = V_o \cos \theta$$

If there are N prism pairs and the scan efficiency is $\eta$, only $2\Pi \eta/N$ radians are used for active scanning, or $\pm \Pi \eta/N$ radians relative to the centre of the scan, so the scan speed V at the ends of the scan is

$$V = V_o \cos (\Pi \eta/N)$$

Thus the speed variations in the sweep or scan can be made arbitrarily small by increasing the number of prism pairs. The total deflection angle of the beam 34 is given approximately by $4\Pi(\mu-1)\alpha \eta/N$ where $\alpha$ is the vertex angle of each prism and $\mu$ is the refractive index of each prism, so the desired deflection angle can be chosen independently of N by selecting the appropriate value of $\alpha$. The deflection angle is proportional to $\mu-1$ so the system is not achromatic, although it may be adequately so if the waveband is restricted or a low-dispersion material is used, such as germanium when the beam 34 is in the infra-red waveband. If required, the system can be rendered achromatic by replacing each prism element by a two-part achromatic prism element or by a placing a diffractive surface on each prism element, in a manner well known in the art.

It is found that reasonably uniform scan speed can be achieved for quite small values of N, in particular values below ten. For example, if $\eta=0.5$, we have:

| N | $V/V_o$ at ends of sweep |
|---|---|
| 2 | 0.707 |
| 3 | 0.866 |
| 4 | 0.923 |
| 5 | 0.951 |
| 6 | 0.965 |

The scan efficiency that can be achieved depends on the number of facets, the diameter of the prism wheel, and the diameter of the beam to be deflected. Required diameter of wheel D for beam diameter d and efficiency $\eta$ is:

$$D = d\{1 + l/\sin[\Pi(l-\eta)/N]\}$$

e.g. for 4 facets and 50% efficiency, D/d = 3.61. In practice a slight increase in size would be necessary to allow for beam shifts in the prisms and the gaps between them.

Figures 3 and 4 show an alternative embodiment of the present invention, in which the wheels 12, 14 do not have a common axis, but are offset. This arrangement permits a simplified driving arrangement to be used but the orientation of the prism elements 18 is more complicated.

As shown in Figure 4 the wheels 12, 14 are located within a housing 40 which carries a drive shaft 42 connected to wheel 12 and to a first cog 44. Cog 44 meshes with a second cog 46 carried by a stub shaft and connected to the second wheel 14. The cogs 44, 46 are the same size thus the wheels 12, 14 contra rotate at the same speed.

Figure 3 illustrates the orientation of the prism elements with arrows 41 pointing to the vertex of each prism element 18. As previously, the pointing direction 41 lies along the line of greatest slope of each prism element 18 but because the rotational axis of one wheel is parallel to but offset from that of the other wheel it follows that at the centre of the scan the unique pointing direction 41 for each prism element 18 through which the beam 34 passes freely does not intersect with the respective rotary axis but is laterally offset therefrom. The centre scan position is illustrated in Figure 3 from which it can be seen that the relevant unique pointing direction is orthogonal to the mid point between the rotary axes. In consequence the sectors are not symmetrical about a wheel radius so that on one wheel, say wheel 12, the profile of the left hand radial edge of one prism element 18 is different from the profile of the right hand radial edge of the adjacent prism element 18 (in the counter-clockwise direction). Therefore at boundary 18A a step exists from one element 18 to the adjacent element 18, the step having a height which varies along the length of the boundary 18A.

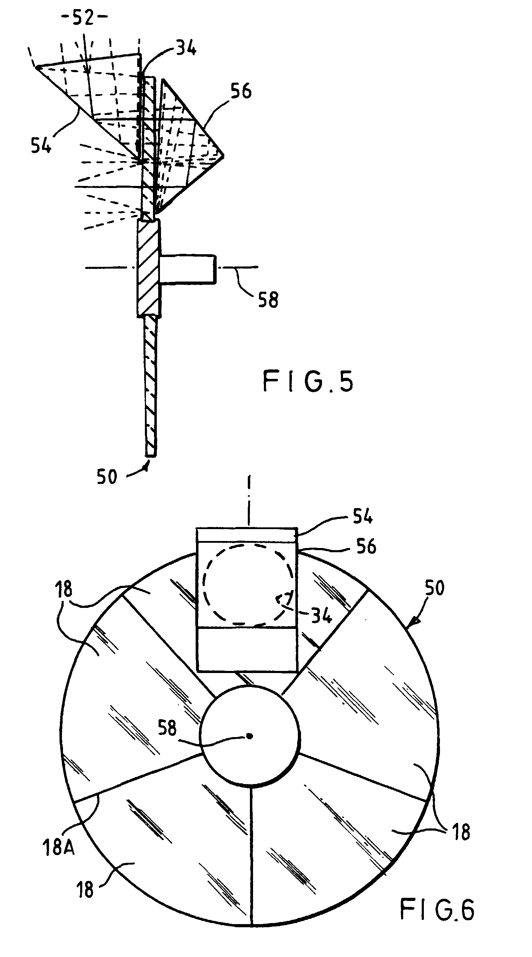

Figures 5 and 6 show an embodiment of the present invention with only a single wheel 50 having five prism elements 18 (wheel 50 is similar to the first wheel 12 of Figure 1 with its pointing direction at the centre of the scan orthogonal to the axis of rotation) mounted to rotate about axis 58. An optical beam 52 is incident on an optical delivery device in the form of a folding prism 54 located in proximity to the rim of the wheel 50. The resultant beam 34 passes through the wheel 50 into a static roof prism 56 which deflects the beam radially and directs the beam through the same prism element 18 of the wheel 50 for a second time. As can best be seen in Figure 5 roof prism 56 is inclined to the face of the wheel 50. This inclination angle is provided as a matter of convenience and may have any value. Thus, the arrangement provides deflection apparatus for producing a deflected beam on the same side of the apparatus as the incident beam. As previously, the scan direction is into or out of the plane of the paper in Figure 5. The wheel 50 of Figure 5 may have its prim sectors organised similarly to the second wheel 14 of Figure 1 and this produces similar results.

The advantages of the various embodiments which have been described are that there is a very short optical path length through the refracting optics, negligible pupil wander occurs, a unidirectional scan is achieved whilst rim bearings are not required for the wheel or wheels 12, 14 so that a constant speed drive is easily provided. Efficiency of at least 50% is achieved and the system is relatively insensitive to wobble of the shaft bearings.

## Claims

1. Apparatus for deflecting a collimated optical beam in a unidirectional manner, said apparatus comprising a rotating assembly of refractive prism elements (18) in the form of sectors uniformly disposed around one or more wheels (12, 14), the prism elements (18) being of equal vertex angles and the arrangement of the prism elements (18) being such that on each wheel (12, 14) all prism elements (18) have each vertex adjacent the axis of rotation (16) or on each wheel (12, 14) all prism elements (18) have each vertex adjacent the wheel rim, and means (9) for directing a collimated light beam through the assembly so as to be twice refracted by said prism elements (18).

2. Apparatus as claimed in claim 1 wherein the prism elements (18) are mounted on two contra-rotating wheels (12, 14) with the vertex angles of the prism elements (18) on one wheel (12) adjacent the wheel periphery and the vertex angles of the prism elements (18) on the other wheel (14) adjacent the wheel axis (16), in which case the beam is refracted once by each prism element.

3. Apparatus as claimed in claim 2 wherein the wheels (12, 14) rotate about a common axis (16) and the prism elements (18) are disposed on the wheels (12, 14) such that at the centre of the scan the pointing directions (41) of the two prism elements (18) through which the beam passes freely are parallel, oppositely disposed and intersect orthogonally with the common axis (16) of rotation.

4. Apparatus as claimed in claim 2 wherein the wheels (12, 14) rotate about separate parallel axes and the prism elements (18) are disposed on the wheels (12, 14) such that at the centre of the scan the pointing directions (41) of the two prism elements (18) through which the beam passes freely are parallel, oppositely disposed and intersect orthogonally with the mid point of the line joining the two axes of rotation.

5. Apparatus as claimed in claim 1 wherein the prism elements (18) are all mounted on a single wheel (50) with the vertex angle of the prism elements 18 all adjacent the wheel periphery or all adjacent the wheel axis, and the directing means (9) comprises a roof prism (56) to direct the beam through a double refracting pass of the same prism element (18).

6. Apparatus according to any preceding claim wherein each prism element (18) is formed by a achromatic prism pair.

7. Apparatus according to any one of claims 1 to 5 wherein each prism element (18) has an achromatising structure on one surface.

8. Apparatus as claimed in any preceding claim wherein each wheel (12, 14, 50) has less than ten prism elements (18).

FIG.1

FIG.2

FIG.3

FIG.4

FIG.5

FIG.6

6